# EUROPEAN PATENT SPECIFICATION

(11) **EP 2 394 869 B1**
(45) Date of publication and mention of the grant of the patent: **03.04.2013**
(21) Application number: 10251081.5
(22) Date of filing: 11.06.2010
(51) Int. Cl.: B60R 21/207

(54) **A motor vehicle safety arrangement for vehicle occupants**
Kraftfahrzeugsicherheitsvorrichtung für Fahrzeuginsassen
Agencement de sécurité pour passagers de véhicule automibile

(43) Date of publication of application: 14.12.2011
(73) Proprietor: Autoliv Development AB, 447 83 Vårgårda (SE)
(72) Inventor: Wolf, Harald, 82131 Stockdorf (DE); Gottschalk, Konrad, 85354 Freising (DE); Jörg, Albert, 82110 Germering (DE)
(74) Representative: Parry, Simon James

(56) References cited:
- EP-A1- 1 698 521
- WO-A1-00/21797
- DE-A1- 19 946 406
- GB-A- 2 397 220
- US-A- 5 149 165
- US-A- 5 333 899
- US-A- 5 678 852
- US-A1- 2009 212 541

## Description

The present invention relates to a motor vehicle safety arrangement.

Occupant restraint systems utilizing airbags are widely used to protect vehicle occupants in the event of an accident involving rapid deceleration of the vehicle. For the driver of a motor vehicle, the airbag is generally mounted in the hub of the steering wheel, whereas for the front seat passenger the airbag is generally mounted in an upper portion of the dashboard or instrument panel. In each case, the respective airbag is positioned and configured to deploy in a manner to protect the head and torso of the vehicle occupant. However, when the vehicle is involved in a frontal impact, the occupant's body moves forwardly relative to the seat and can slide or "submarine" under the instrument panel or steering wheel. Such action can also cause the occupant to rotate out of position for correct deployment of the airbag.

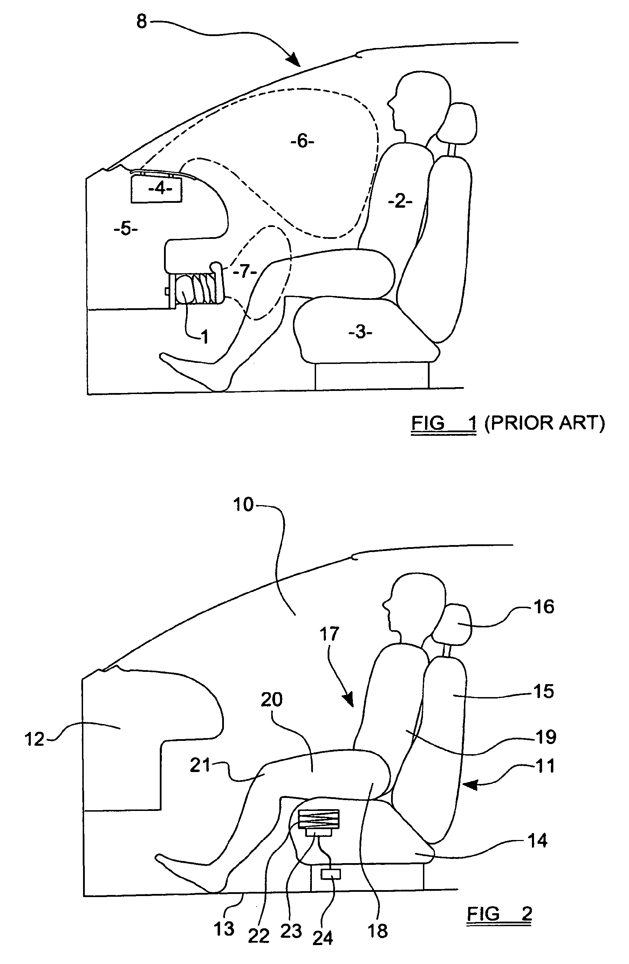

It has therefore been proposed previously to provide a knee airbag system to engage the occupant's knees or lower legs and prevent submarining under the main head/torso airbag. Such a knee airbag system typically includes a knee airbag which is arranged to deploy during an accident to restrain forward movement of an occupant's knees and legs. Figure 1 shows an exemplary knee airbag system of this general type. The knee airbag system 1 is shown relative to an occupant 2 sitting in the front passenger seat 3 of a motor vehicle. The knee airbag system 10 is shown in combination with a primary airbag system 4 mounted in an upper region of the instrument panel 5. The primary airbag system 4 is arranged to deploy in front of the occupant's torso. The knee airbag system 1 is mounted to the lower region of the instrument panel in front of the occupant's knees and lower legs. Upon receipt of an actuation signal from a crash sensor, the primary airbag system 4 and the knee airbag system 1 are both actuated to inflate their respective airbags 6, 7 into the inflated positions illustrated in figure 1. In the inflated position, the primary airbag 6 restrains the occupant's torso from being propelled forwards towards the windscreen 8 and the upper region of the instrument panel 5. There can be a tendency for the occupant's body then to be propelled forwards and under the primary airbag 6 (so-called "submarining"). This can be particularly pronounced when the occupant is not restrained in the seat 3 by a seat-belt, or if the seat-belt is not correctly positioned and tensioned. To prevent submarining, the knee airbag 7 deploys and expands into an inflated position to hold the knees and lower legs from sliding forwards. This causes the lower portion of the occupant's body to resist submarining. As will be appreciated, the knee airbag also serves to protect the occupant's knees from injury through impact with the instrument panel.

As will be appreciated, for a knee airbag of the general type described above and shown in figure 1 to function correctly, the knee airbag must be sufficiently large to be engaged by the occupant's knees in the event of an accident. However, vehicle occupants can sit with their legs in a large number of different positions. For example, a particularly tall occupant may have a tendency to sit with his or her legs quite widely apart in order to assume a sitting position that is comfortable. This means that the occupant's knees are spaced widely apart and so to protect an occupant sitting in such a position the knee airbag must be wide and have a significant volume. A large airbag requires a large volume of inflating gas, and so cannot be packaged as small or inflated as quickly as a smaller airbag. For these reasons it is desirable to be able to reduce the size of the knee airbag, but of course care must be taken not to reduce its effectiveness in the process.

It has also been found that passengers sitting with their legs spread apart can be more susceptible to injury in the event that the motor vehicle is involved in a side impact, an offset frontal impact or an oblique impact. As will be appreciated, an occupant sitting with his or her legs spaced apart will have his or her outboard knee located closer to the side skin of the vehicle than would be the case for an occupant sitting with his or her legs together. This means that should the motor vehicle be struck from the side, the occupant's outboard knee will be at increased risk of injury due to its proximity to the side of the vehicle which is likely to be deformed inwardly in the impact. It is therefore desirable to provide protection against this sort of injury.

WO 00/21797 discloses an airbag arrangement for a vehicle seat, which incorporates an airbag having a plurality of chambers, each of which are inflated by the same inflator. Amongst these chambers are chambers which deploy into a position adjacent the thighs or hips of an occupant of the seat.

According to the present invention, there is provided a safety arrangement for a motor vehicle having a seat comprising a squab, the safety arrangement comprising an inner member located in the region of an inboard part of the squab, and an outer member located in the region of an outboard part of the squab, said inner and outer members being operable in response to an actuating signal from a sensor to urge the inboard and outboard thighs respectively of an occupant of the seat in a substantially medial direction towards the mid-sagittal plane of the occupant, the arrangement being effective upon operation of said members to urge the occupant's knees towards one another.

Advantageously, the arrangement further comprises an airbag arranged for inflation generally in front of the knees of said occupant.

Conveniently, each said member is located in the region of a front part of the squab.

Preferably, each said member is provided within the squab of the seat.

Advantageously, each said member is provided generally adjacent the squab of the seat.

Preferably, said outer member is provided on a side door of the motor vehicle.

Advantageously, each said member is provided in the form of an airbag arranged for inflation by an inflator.

Conveniently, each said member comprises a moveable element actuable in response to said signal to move from a first relatively outboard position to a second relatively inboard position with respect to the squab of the seat.

Advantageously, each said moveable element is mounted for pivotal movement between said first and second positions.

Preferably, each said moveable element is mechanically actuable.

Advantageously, each said moveable element is hydraulically actuable.

Conveniently, each said moveable element is pneumatically actuable.

Preferably, each said moveable element is electrically actuable.

Advantageously, each said moveable element is pyrotechnically actuable.

So that the invention may be more readily understood, and so that further features thereof may be appreciated, embodiments of the invention will now be described by way of example with reference to the accompanying drawings in which:
Figure 1 (discussed above) is a cross-sectional view of a passenger compartment of a motor vehicle having a prior art knee airbag system to supplement a primary airbag system;
Figure 2 is a cross-sectional view of a passenger compartment of a motor vehicle provided with a safety arrangement in accordance with an embodiment of the present invention, the safety device being shown prior to deployment;
Figure 3 is a schematic view from above showing an occupant of a seat equipped with the safety arrangement of figure 2;
Figure 4 is a schematic view corresponding to that of figure 3, but which shows the safety arrangement after deployment, and its effect in urging the occupant's legs together;
Figure 5 is a cross-sectional view corresponding to that of figure 2, but which shows the safety arrangement after deployment;
Figure 6 is a schematic view from above of showing the squab of a vehicle seat equipped with a safety arrangement in accordance with another embodiment of the present invention, the arrangement being shown prior to deployment;
Figure 7 is a view corresponding to that of figure 6, but which shows the safety arrangement after deployment;
Figure 8 is a schematic view from above of showing the squab of a vehicle seat equipped with a safety arrangement in accordance with a further embodiment of the present invention, the arrangement being shown prior to deployment;
Figure 9 is a view corresponding to that of figure 8, but which shows the safety arrangement after deployment;
Figure 10 is a cross sectional view taken through a vehicle seat equipped with a safety device in accordance with yet another embodiment of the present invention;
Figure 11 is a perspective view of the vehicle seat of figure 10; and
Figure 12 is a perspective illustration showing the arrangement of figures 10 and 11 having been deployed to urge the outboard leg of a seat occupant inwardly.

Referring now in more detail to figure 2, there is illustrated the front part of a motor vehicle cabin 10, the cabin having a front passenger seat 11 and a dashboard or instrument panel 12. The seat 11 is mounted to the floor 13 of the vehicle in a generally conventional manner and comprises a squab 14, a back rest 15 and a head rest 16 in a generally conventional manner. Figure 2 shows an occupant 17 sitting in the seat 11 and adopting a normal sitting position in which the occupant's posterior 18 is supported on the squab 14, with the occupant's torso 19 resting against the back rest 15.

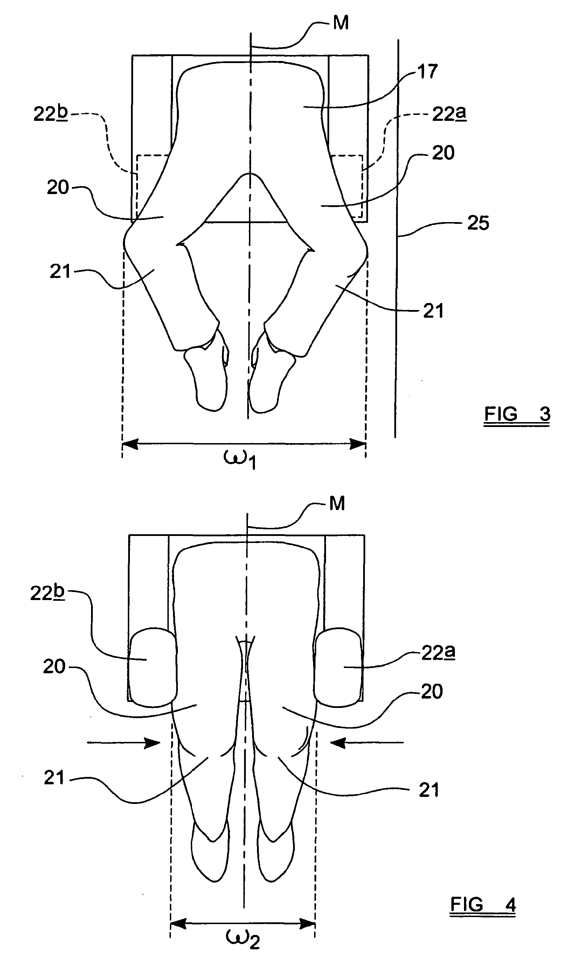

As will be appreciated, in the normal sitting position illustrated in figure 2, the occupant's thighs 20 extend generally forwardly such that the occupant's knees 21 are positioned slightly in front of the forwardmost region of the squab 14 and generally behind the rearmost part of the instrument panel 12. However, as illustrated in figure 3, the occupant 17 may adopt a relaxed sitting position in which his or her legs are spread apart such that the thighs 20 extend outwardly. This has been found to be particularly likely in the case of a relatively tall seat occupant. As will be noted, figure 3 shows the occupant's legs spread apart such that the occupant's knees 21 are spaced by an initial distance w¹. For the reasons explained above, this sitting position can be problematic in terms of interaction between the occupant's knees 21 and a knee airbag of the general type discussed above. The vehicle seat 11 shown in figures 2 and 3 is thus provided with a safety device which is operable to move the occupant's thighs 20 and knees 21 closer to one another in the event of an accident.

More particularly, having regard to figures 2 and 3, it is to be appreciated that the seat 11 is provided with a pair of inflatable airbags 22, each of which is provided in fluid communication with an inflator such as a gas generator 23 of a type known *per se.* Each airbag 22 is arranged within the upholstery of the squab 14, in the front region of the squab and on a respective side of the squab, as illustrated most clearly in figure 3. As will be appreciated, the airbags 22 are initially provided in a tightly packed configuration so as to take up the minimum of space and facilitate convenient installation within the structure of the seat squab 14.

It is to be appreciated that both the outboard airbag 22a (i.e. the airbag 22 closest to the side skin 25 of the motor vehicle as illustrated in figure 3) and the inboard airbag 22b may either be fluidly connected to their own respective gas generators 23, or may alternatively be provided in fluid communication with a single, shared gas generator. In either case, it is proposed that the or each gas generator 23 will be operatively connected to a crash sensor 24, as illustrated schematically in figure 2. The crash sensor 24 may either be configured to provide an actuating signal on detection of an actual crash occurring, or may alternatively take the form of a so-called pre-crash sensor configured to provide an actuating signal in the event that a likely crash is predicted. Such sensors are widely known per se and will not be described in further detail here.

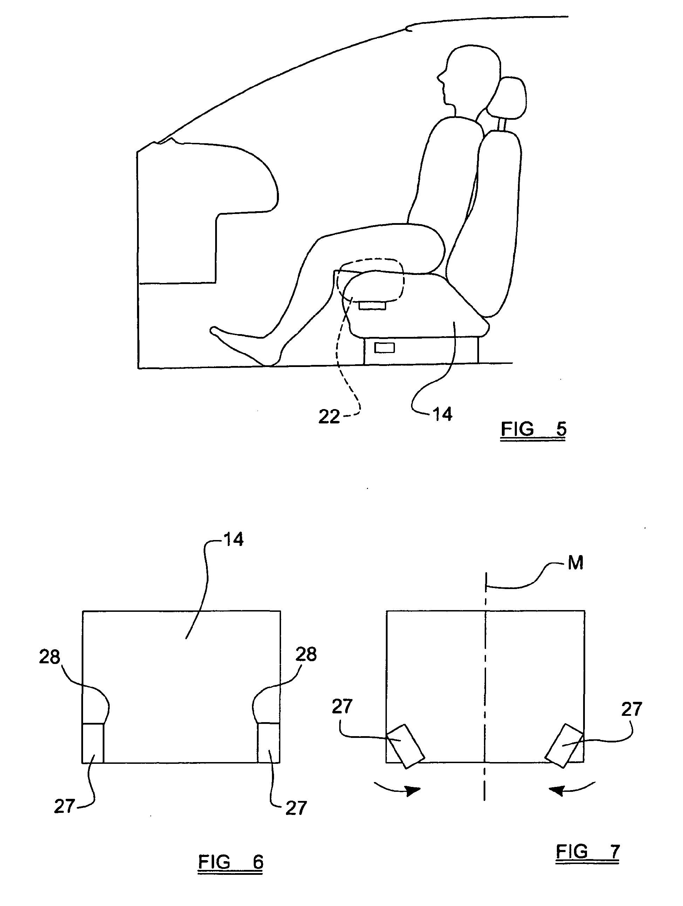

As will be appreciated, the gas generator 23 is thus arranged for actuation in response to the receipt of an appropriate actuating signal from the crash sensor 24. Actuation of the gas generator 23 is effective to rapidly inflate the airbags 22 which are arranged to burst through appropriate tear seams or other predetermined regions of relative mechanical weakness in the upholstery of the seat squab 14 so as to adopt the inflated positions illustrated generally in figures 4 and 5. As will be appreciated, because of the location of each airbag 22 in the forward region of the seat squab and on respective inboard and outboard sides of the seat squab, inflation of each airbag 22a, 22b is effective to urge a respective thigh 20 of the occupant 17 generally inwardly, in a substantially medial direction (as illustrated by the arrows in figure 4) towards the mid-sagittal plane M of the occupant. The occupant's knees 21 are thus brought closer together so as to be separated by a distance w², distance w² being less than the initial distance w¹ between the occupant's knees. The occupant's knees 21 are thus brought into alignment with the pelvis for more effective engagement by a knee airbag located in front of the occupant, the knee airbag thus being more effective in preventing "submarining" of the occupant.

Although the invention has been described above with specific reference to a particular embodiment, it is to be appreciated that various modifications or alterations can be made without departing from the scope of the proclaimed invention. For example, the arrangement proposed above could be modified for reversible actuation in the case that it is intended to be actuated in response to a signal from a pre-crash sensor. In such an arrangement it is envisaged that the airbags 22 could be provided in fluid communication with a pneumatic gas system, rather than the gas generators 23, for reversible inflation in response to an actuation signal from the pre-crash sensor. In the case that the seat is equipped with a pneumatic system comprising a gas bladder in order to permit the seat occupant to selectively modify the shape of the seat for personal comfort (known per se), then the airbags could be provided as an extension of this system.

Figures 6 and 7 illustrate an alternative arrangement in which the airbags 22 are replaced by moveable elements 27. More particularly it is to be appreciated that figures 6 and 7 illustrate the squab 14 of the vehicle seat in schematic plan view from above. In this arrangement, the forwardmost corner regions of the squab 14 are each provided with a respective moveable element 27. The moveable elements 27 may take any convenient form and may, for example, take a form of moveable blocks of relatively firm upholstery. The two moveable elements are each mounted for pivotal movement about a respective pivot point 28 so as to move from the initial position illustrated in figure 6 to the alternate, operable position illustrated in figure 7. As will be appreciated, this movement of the elements 27 is generally inwardly, in a medial direction towards the mid-sagittal plane M of the seat occupant. The moveable elements 27 are thus effective to urge the occupant's thighs 20, and hence also the occupant's knees 21, inwardly in the same general manner as described above in detail in connection with the arrangement of figures 2-5.

It is envisaged that the moveable elements 27 may be arranged for actuation in any one of a number of possible ways. For example, the moveable elements 27 could be mechanically actuable, hydraulically actuable, pneumatically actuable, or could even be electrically or pyrotechnically actuable. More particularly, it is envisaged that actuation of the moveable elements 27 could either be triggered "in-crash" (i.e. upon the detection of an actual crash by a crash sensor), or "pre-crash" (i.e. upon the prediction of a likely crash by a pre-crash sensor). In the case of in-crash triggering, extremely fast actuation is required and so actuation is most likely to be pyrotechnical, by way of an irreversible pyrotechnical activator. In the case of pre-crash triggering there is less time pressure for actuation, and also reversibility is desirable. In this situation the moveable elements 27 could be actuated mechanically, hydraulically, pneumatically, or even electrically. For example, the seat could be equipped with a pneumatic gas bladder in order to permit the seat occupant to selectively modify the shape of the seat for personal comfort, and in this sort of arrangement the moveable elements could be provided in the form of, or in combination with, extra gas chambers arranged for inflation in response to an actuation signal from the pre-crash sensor.

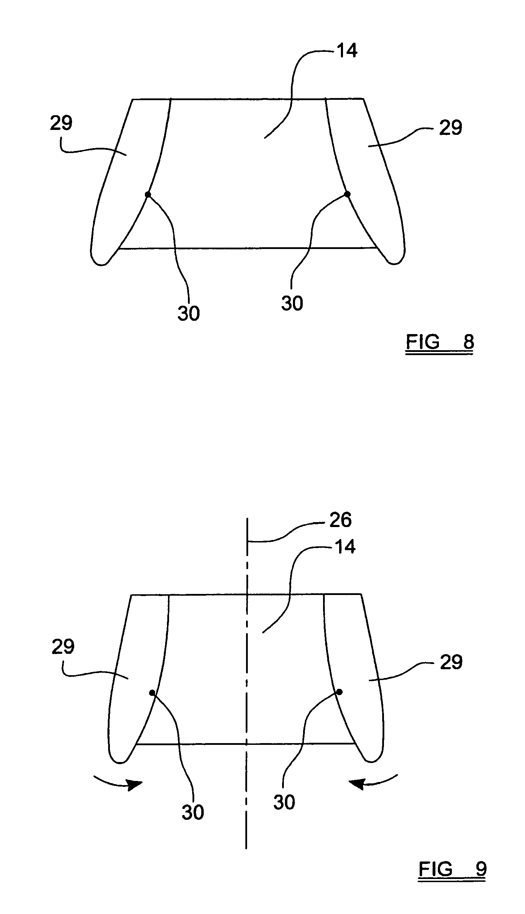

Turning now to consider figures 8 and 9, there is illustrated an alternative embodiment of the present invention, in which the seat squab 14 is provided with a pair of moveable elements 29, each of which takes the form of a side bolster forming part of the complete upholstery of the seat squab. More particularly it is to be noted that the side bolsters 29 are arranged for pivotal movement about respective pivotal points 30 which are located generally towards the front region of the seat squab. In a generally similar manner to that of the arrangement illustrated in figures 6 and 7, the bolsters 29 are arranged so as to be moved in a pivotal manner, about their respective pivot points 30 in response to an appropriate actuating signal from a crash sensor, this movement being effective to move the forward part of each bolster 29 generally inwardly, in a medial direction towards the mid-sagittal plane M of the occupant. As will be appreciated, this movement of the bolsters 29 is thus effective to move the occupant's thighs 20 and also the occupant's knees 21 generally inwardly in the same manner as described above in the context of the previously described embodiments.

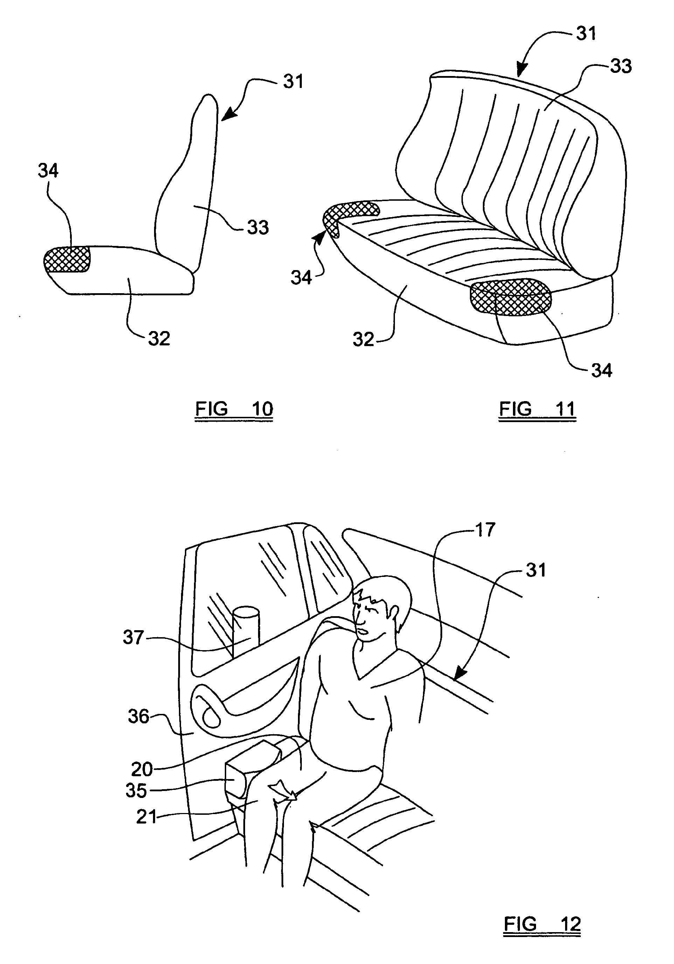

Whilst the invention has been described above in connection with arrangements configured to move both of the applicant's thighs, and hence also both of the applicant's knees inwardly towards the occupant's mid-sagittal plane, it is envisaged that embodiments of the present invention may be configured so as to move only the occupant's outboard thigh (and associated knee) towards the occupant's mid-sagittal plane. For example, such an arrangement is illustrated schematically in figures 10-12 of the attached drawings, and shows an elongate rear bench seat 31 of a generally conventional passenger motor vehicle. As will be appreciated, the rear bench seat 31 has a width measured generally parallel to the transverse axis of the motor vehicle which is sufficient to allow two or more occupants to sit on the bench seat in side by side relation to one another. The bench seat 31 comprises a squab 32 and a back rest 33 in a generally conventional manner. As illustrated most clearly in figure 11, the bench seat 31 is provided with a pair of safety devices 34, each of which is located in the region of a front part of the squab 32, to a respective side of the squab. As will be appreciated, the bench seat 31 extends substantially completely across the full width of the motor vehicle between opposing side panels or rear side doors of the vehicle. Accordingly, each safety device 34 is located in the outboard region of the squab 32.

It is envisaged that the devices 34 may take any convenient form such as, for example, any of the above mentioned arrangements discussed in the context of figures 2-9. In particular, the safety devices 34 may each take the form of an inflatable airbag in a generally similar configuration to that discussed above in connection with figures 2-4. As illustrated most clearly in figure 12, actuation of such an airbag type device 34 is effective to inflate the airbag, indicated schematically at 35 in figure 12, such that the airbag urges the occupant's outboard thigh 20 and associated knee 21 (i.e. the occupant's thigh and associated knee which is located closest to the adjacent side door or panel 36) inwardly, in a medial direction indicated generally by the arrow in figure 12, towards the occupant's mid-sagittal plane. It is envisaged that an arrangement of this type could be configured so as to be actuated in response to an appropriate crash signal from a sensor indicative of an actual or likely side impact with the motor vehicle. As will thus be appreciated, the safety arrangement of this embodiment is thus effective to move the seat occupant's thigh inwardly relative to the vehicle, and hence away from the point of side impact, as indicated schematically at 37 in figure 12. It is believed that an arrangement of this type, effective to move the occupant's outer thigh inwardly, away from the point of side impact, will be beneficial in preventing leg injuries to the occupant in the event of an accident involving a side impact to the motor vehicle.

Although the invention has been described above in connection with several embodiments which incorporate safety members provided within the squab 14, 32 of a motor vehicle seat 11, 31, it is envisaged that alternative embodiments of the safety arrangement could be configured such that the inflatable airbag, or other convenient moveable member, could be provided separate from the vehicle seat, but nevertheless generally adjacent the side part of the squab. For example, in the case of an outboard airbag or moveable member, this could be provided within the structure of the vehicle side door or side panel. Similarly, in the case of an inboard airbag or moveable member, this could be provided in the structure of a central arm rest, or central tunnel of the motor vehicle or the like.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A safety arrangement for a motor vehicle having a seat (11, 31) comprising a squab (14, 32), the safety arrangement comprising an inner member (22b) located in the region of an inboard part of the squab (14), and an outer member (22a, 34) located in the region of an outboard part of the squab (14, 32), the arrangement being **characterised by** said inner (22b) and outer (22a) members being operable in response to an actuating signal from a sensor (24) to urge the inboard and outboard thighs (20) respectively, of an occupant (17) of the seat in a substantially medial direction towards the mid-sagittal plane (M) of the occupant, the arrangement being effective upon operation of said members to urge the occupant's knees (21) towards one another.

2. A safety arrangement according to claim 1 further comprising an airbag (7) arranged for inflation generally in front of the knees (21) of said occupant.

3. A safety arrangement according to claim 1 or claim 2, wherein each said member (22, 34) is located in the region of a front part of the squab (14, 32).

4. A safety arrangement according to any preceding claim, wherein each said member (22, 34) is provided within the squab (14, 32) of the seat.

5. A safety arrangement according to any one of claims 1 to 3, wherein each said member (22, 34) is provided generally adjacent the squab (14, 32) of the seat.

6. A safety arrangement according to claim 5, wherein said outer member is provided on a side door (36) of the motor vehicle.

7. A safety arrangement according to any preceding claim, wherein each said member is provided in the form of an airbag (22) arranged for inflation by an inflator (23).

8. A safety arrangement according to any one of claims 1 to 6, wherein each said member comprises a moveable element (27, 29) actuable in response to said signal to move from a first relatively outboard position to a second relatively inboard position with respect to the squab (14) of the seat.

9. A safety arrangement according to claim 8, wherein each said moveable element (27, 29) is mounted for pivotal movement between said first and second positions.

10. A safety arrangement according to claim 8 or claim 9, wherein each said moveable element (27, 29) is mechanically actuable.

11. A safety arrangement according to claim 8 or claim 9, wherein each said moveable element (27, 29) is hydraulically actuable.

12. A safety arrangement according to claim 8 or claim 9, wherein each said moveable element (27, 29) is pneumatically actuable.

13. A safety arrangement according to claim 8 or claim 9, wherein each said moveable element (27, 29) is electrically actuable.

14. A safety arrangement according to claim 8 or claim 9, wherein each said moveable element (27, 29) is pyrotechnically actuable.

## Patentansprüche

1. Sicherheitsvorrichtung für ein Kraftfahrzeug, das einen Sitz (11, 31) aufweist, der ein Sitzpolster (14, 32) umfasst, wobei die Sicherheitsvorrichtung ein inneres Element (22b) umfasst, das sich im Bereich eines zur Fahrzeugmitte gerichteten Teils des Sitzpolsters (14) befindet, und ein äußeres Element (22a, 34), das sich im Bereich eines zur Fahrzeugseite gerichteten Teils des Sitzpolsters (14, 32) befindet, wobei die Vorrichtung **dadurch gekennzeichnet ist, dass** das innere (22b) und äußere (22a) Element als Reaktion auf ein Auslösesignal von einem Sensor (24) funktionsfähig sind, den zur Fahrzeugmitte gerichteten beziehungsweise zur Fahrzeugseite gerichteten Schenkel (20) eines Insassen (17) auf dem Sitz in eine im Wesentlichen mittige Richtung zur Medianebene (M) des Insassen hin zu drücken, wobei die Vorrichtung bei der Betätigung der Elemente die Knie (21) des Insassen wirksam aufeinander zu drückt.

2. Sicherheitsvorrichtung nach Anspruch 1, ferner umfassend einen Airbag (7), der angeordnet ist, um in Allgemeinen vor den Knien (21) des Insassen aufgeblasen zu werden.

3. Sicherheitsvorrichtung nach Anspruch 1 oder Anspruch 2, wobei sich jedes Element (22, 34) im Bereich eines Vorderteils des Sitzpolsters (14, 32) befindet.

4. Sicherheitsvorrichtung nach einem der vorhergehenden Ansprüche, wobei jedes Element (22, 34) in dem Sitzpolster (14, 32) des Sitzes vorgesehen ist.

5. Sicherheitsvorrichtung nach einem der Ansprüche 1 bis 3, wobei jedes Element (22, 34) im Allgemeinen neben dem Sitzpolster (14, 32) des Sitzes vorgesehen ist.

6. Sicherheitsvorrichtung nach Anspruch 5, wobei das äußere Element an einer Seitentür (36) des Kraftfahrzeugs vorgesehen ist.

7. Sicherheitsvorrichtung nach einem der vorhergehenden Ansprüche, wobei jedes Element in Form eines Airbags (22) vorgesehen ist, der zum Aufblasen durch einen Gasgenerator (23) angeordnet ist.

8. Sicherheitsvorrichtung nach einem der Ansprüche 1 bis 6, wobei jedes Element ein bewegliches Element (27, 29) umfasst, das als Reaktion auf das Signal so betätigbar ist, dass es sich aus einer ersten verhältnismäßig außenliegenden Position in eine zweite verhältnismäßig innenliegende Position bezogen auf das Sitzpolster (14) des Sitzes bewegt.

9. Sicherheitsvorrichtung nach Anspruch 8, wobei jedes bewegliche Element (27, 29) so montiert ist, dass es sich schwenkbar zwischen der ersten und zweiten Position bewegt.

10. Sicherheitsvorrichtung nach Anspruch 8 oder Anspruch 9, wobei jedes bewegliche Element (27, 29) mechanisch betätigbar ist.

11. Sicherheitsvorrichtung nach Anspruch 8 oder Anspruch 9, wobei jedes bewegliche Element (27, 29) hydraulisch betätigbar ist.

12. Sicherheitsvorrichtung nach Anspruch 8 oder Anspruch 9, wobei jedes bewegliche Element (27, 29) pneumatisch betätigbar ist.

13. Sicherheitsvorrichtung nach Anspruch 8 oder Anspruch 9, wobei jedes bewegliche Element (27, 29) elektrisch betätigbar ist.

14. Sicherheitsvorrichtung nach Anspruch 8 oder Anspruch 9, wobei jedes bewegliche Element (27, 29) pyrotechnisch betätigbar ist.

## Revendications

1. Agencement de sécurité pour un véhicule automobile présentant un siège (11, 31) comprenant un coussin (14, 32), l'agencement de sécurité comprenant un organe intérieur (22b) situé dans la zone d'une partie côté intérieur du coussin (14), et un organe extérieur (22a, 34) situé dans la zone d'une partie côté extérieur du coussin (14, 32), l'agencement étant **caractérisé en ce que** lesdits organes intérieur (22b) et extérieur (22a) sont opérationnels en réaction à un signal d'actionnement d'un capteur (24) pour forcer les cuisses (20) respectivement côté intérieur et côté extérieur d'un passager (17) du siège dans une direction essentiellement médiale vers le plan sagittal médian (M) du passager, l'agencement produisant son effet lors du fonctionnement desdits organes pour forcer les genoux (21) du passager l'un vers l'autre.

2. Agencement de sécurité selon la revendication 1, comprenant en outre un airbag (7) agencé pour le gonflage en général devant les genoux (21) dudit passager.

3. Agencement de sécurité selon la revendication 1 ou la revendication 2, dans lequel chaque dit organe (22, 34) est situé dans la zone d'une partie avant du coussin (14, 32).

4. Agencement de sécurité selon une quelconque revendication précédente, dans lequel chaque dit organe (22, 34) est prévu à l'intérieur du coussin (14, 32) du siège.

5. Agencement de sécurité selon l'une quelconque des revendications 1 à 3, dans lequel chaque dit organe (22, 34) est prévu en général adjacent au coussin (14, 32) du siège.

6. Agencement de sécurité selon la revendication 5, dans lequel ledit organe extérieur est prévu sur une porte (36) latérale du véhicule automobile.

7. Agencement de sécurité selon une quelconque revendication précédente, dans lequel chaque dit organe est prévu sous forme d'un airbag (22) agencé pour le gonflage par un générateur de gaz (23).

8. Agencement de sécurité selon l'une quelconque des revendications 1 à 6, dans lequel chaque dit organe comprend un élément mobile (27, 29) actionnable en réaction audit signal pour se déplacer d'une première position relativement extérieure à une seconde position relativement intérieure par rapport au coussin (14) du siège.

9. Agencement de sécurité selon la revendication 8, dans lequel chaque dit élément mobile (27, 29) est monté pour un mouvement pivotant entre lesdites première et seconde positions.

10. Agencement de sécurité selon la revendication 8 ou la revendication 9, dans lequel chaque dit élément mobile (27, 29) est actionnable de manière mécanique.

11. Agencement de sécurité selon la revendication 8 ou la revendication 9, dans lequel chaque dit élément mobile (27, 29) est actionnable de manière hydraulique.

12. Agencement de sécurité selon la revendication 8 ou la revendication 9, dans lequel chaque dit élément mobile (27, 29) est actionnable de manière pneumatique.

13. Agencement de sécurité selon la revendication 8 ou la revendication 9, dans lequel chaque dit élément mobile (27, 29) est actionnable de manière électrique.

14. Agencement de sécurité selon la revendication 8 ou la revendication 9, dans lequel chaque dit élément mobile (27, 29) est actionnable de manière pyrotechnique.
